(19) Europäisches Patentamt
European Patent Office
Office européen des brevets

(11) **EP 2 390 713 A1**

(12) **EUROPEAN PATENT APPLICATION**
published in accordance with Art. 153(4) EPC

(43) Date of publication:
**30.11.2011 Bulletin 2011/48**

(51) Int Cl.:
*G02F 1/1333* (2006.01)   *G02F 1/133* (2006.01)
*G02F 1/1335* (2006.01)   *G06F 3/041* (2006.01)
*G09F 9/00* (2006.01)   *G09F 9/30* (2006.01)

(21) Application number: **09838829.1**

(22) Date of filing: **28.08.2009**

(86) International application number:
**PCT/JP2009/065108**

(87) International publication number:
**WO 2010/084639 (29.07.2010 Gazette 2010/30)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **20.01.2009  JP 2009010231**

(71) Applicant: **Sharp Kabushiki Kaisha
Osaka-shi, Osaka 545-8522 (JP)**

(72) Inventors:
• **Noma, Mikihiro
Osaka-shi, Osaka 545-8522 (JP)**
• **Takahama, Kengo
Osaka-shi, Osaka 545-8522 (JP)**

• **Miyazaki, Shinichi
Osaka-shi, Osaka 545-8522 (JP)**
• **Yahata, Yoichiro
Osaka-shi, Osaka 545-8522 (JP)**
• **Yoshimoto, Yoshiharu
Osaka-shi, Osaka 545-8522 (JP)**
• **Maeda, Kazuhiro
Osaka-shi, Osaka 545-8522 (JP)**

(74) Representative: **Müller - Hoffmann & Partner
Patentanwälte
Innere Wiener Strasse 17
81667 München (DE)**

(54) **LIQUID CRYSTAL DISPLAY DEVICE**

(57)   A liquid crystal panel (20) provided in a liquid crystal display device of the present invention includes a plurality of optical sensor elements (30) each for detecting an intensity of light received, and has an area sensor function to detect an external input position by causing each of the optical sensor elements (30) to detect an image on the panel surface. The liquid crystal panel (20) includes the optical sensor elements (30) constituting an area sensor and a temperature compensating sensor (50) for carrying out temperature compensation of each of these optical sensor elements (30). The temperature compensating sensor (50) includes a lower-layer light blocking film, optical sensor elements (30A) each for detecting a temperature of an environment where the liquid crystal display device is placed which optical sensor elements (30A) are provided on the lower-layer light blocking film, and an upper-layer light blocking film which is provided so as to cover the optical sensor elements for detecting a temperature which upper-layer light blocking film blocks ultraviolet light, visible light, and infrared light. This makes it possible to attain a liquid crystal display device including an area sensor that does not receive an influence of a temperature of an environment where the liquid crystal display device is used and accordingly has a high detection precision.

F I G. 1

EP 2 390 713 A1

**Description**

Technical Field

The present invention relates to a liquid crystal display device that includes optical sensor elements and has an area sensor function to detect a position of an external input.

Background Art

Among display devices such as liquid crystal display devices, there has been developed a touch-panel-integrated display device having a touch panel (area sensor) function. The touch panel function allows detecting a touched position when a panel surface is touched with an input pen or a finger of a person.

Conventional touch-panel-integrated display devices are typically either a resistive type (a system in which an input position is detected as a result of a contact, caused by a press, between an upper conductive substrate and a lower conductive substrate) or an electrostatic capacitive type (a system in which an input position is detected by detecting a change in capacitance at a touched position).

In recent years, there has been a progress in development of a display device including an optical sensor element, such as a photodiode or a phototransistor, in each pixel (or for each pixel group including a plurality of pixels) in an image display area. Because each pixel includes an optical sensor element as described above, a function of an area sensor (specifically, a scanner function, a touch panel function, etc.) can be attained in a typical display device. In other words, by causing the optical sensor elements to function as an area sensor, it is possible to attain a touch-panel (or scanner) integrated display device.

Meanwhile, in a display device such as the liquid crystal display device, a surface temperature of the display device may rise due to a factor such as an environment in which the display device is used. This may influence electric characteristics of an internal circuit element or the like and cause a problem such as deterioration in image quality.

Patent Literature 1 discloses a configuration of a liquid crystal display device including: temperature detecting means; and a frequency modulation circuit for modulating a driving frequency of the liquid crystal display device, in accordance with a temperature detected by the temperature detecting means.

Further, in a liquid crystal display device including the optical sensor element such as the photodiode or the phototransistor, in a case where a surface temperature of the display device rises, a detection sensitivity of the optical sensor element deteriorates. This is because, though the optical sensor element such as the photodiode or the phototransistor is configured to cause current of different values to flow therein in accordance with an amount of light received, current also flows in the optical sensor element due to other factors such as a temperature or the like.

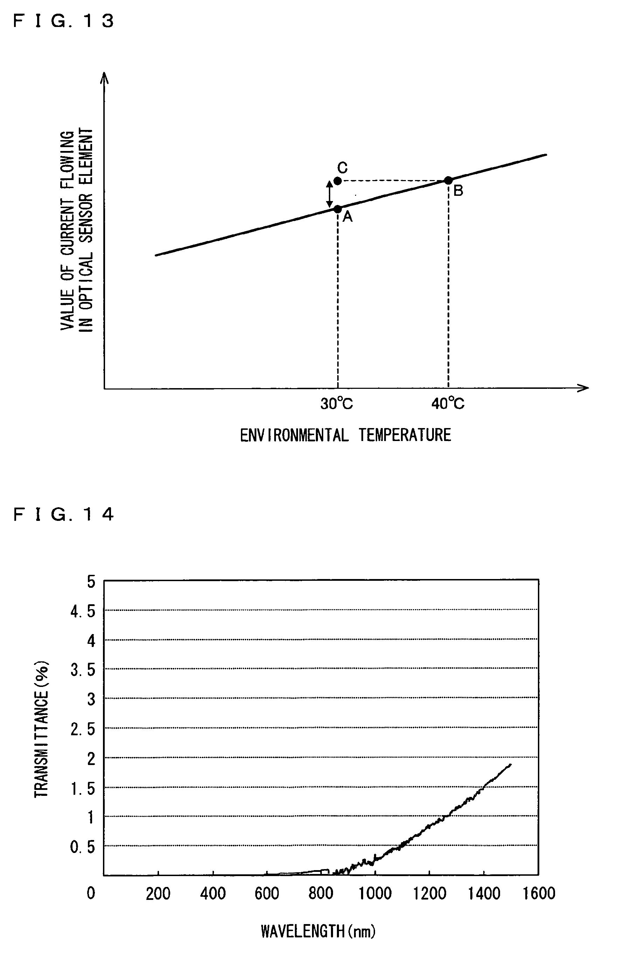

Fig. 13 is a diagram illustrating a relation between a change in environmental temperature and a change in value of current that flows in the optical sensor element in an environment where no light is present.

As shown in Fig. 13, in the optical sensor element, a value of current that flows at an environmental temperature of 40 °C (at a point B in Fig. 13) is higher than a value of current that flows at an environmental temperature of 30 °C (at a point A in Fig. 13). In this way, as an environmental temperature rises, a value of current that flows in the optical sensor element increases. This makes it difficult to find out a value of current in accordance with only an amount of light received.

In order to solve this problem, generally, for such an optical sensor element, another optical sensor element for compensating dark current is provided as a correction sensor for compensating a value of detected current in the optical sensor which value varies depending on temperatures. This makes it possible to carry out temperature compensation for the optical sensor element.

On the optical sensor element for compensating dark current, a light blocking film for blocking light that enters from the outside is provided.

In the display device, in particular, in a liquid crystal display device, as the light blocking film, a black matrix made of carbon black is generally used. The black matrix is provided on a color filter substrate.

Citation List

[Patent Literature]

Patent Literature 1

Japanese Patent Application Publication, *Tokukai*, No. 2005-91385 A (Publication Date: April 7, 2005)

Summary of Invention

Technical Problem

However, a light blocking film that is provided in an optical sensor element for compensating dark current and that is made of carbon black transmits a part of light in an infrared region. Therefore, the light blocking film cannot completely eliminate an influence of light. Accordingly, it has been difficult to detect a value of current that varies due to only an influence of temperature.

Fig. 14 is a diagram illustrating a transmittance of carbon black at each wavelength of light.

As shown in Fig. 14, carbon black cannot completely block light in an infrared region and transmits a part of the light in the infrared region. Therefore, in a configuration where such carbon black is used for the light blocking film of the optical sensor for compensating dark current, a highly precise temperature compensation is not possible.

With reference to Fig. 13, the following explains this in more detail. In a case where, for example, the light blocking film provided in the optical sensor for compensating dark current cannot completely block light in an infrared region but transmits a part of the light in the infrared region, as shown in Fig. 13, a value of current that flows in the optical sensor for compensating dark current does not become a value corresponding to a point A in Fig. 13 but becomes a value corresponding to a point C in Fig. 13 though an actual environmental temperature is 30 °C. In Fig. 13, the value corresponding to the point C is equal to a value of current (at a point B in Fig. 13) that flows in a case where the environmental temperature is 40 °C. As a result, the optical sensor for compensating dark current as described above detects the environment temperature as 40 °C.

The present invention is attained in view of the above problems. An object of the present invention is to attain a liquid crystal display device including an area sensor that is not influenced by a temperature of an environment where the liquid crystal display device is used and accordingly can provide a high detection precision.

Solution to Problem

In order to solve the above problem, a liquid crystal display device of the present invention having an area sensor function for detecting an external input position, the liquid crystal display device includes: a liquid crystal panel having a liquid crystal layer provided between an active matrix substrate and a counter substrate, the liquid crystal panel detecting an image on a panel surface and thereby allowing the external input position to be detected, the liquid crystal panel including: the liquid crystal panel including an area sensor section including a plurality of optical sensor elements each for detecting an intensity of light received, the area sensor section being for detecting the external input position by causing each of the plurality of optical sensor elements to detect the image on the panel surface, the area sensor section including the plurality of optical sensor elements each for detecting an intensity of light received, the area sensor section further including: a temperature compensating sensor for carrying out temperature compensation for each of the plurality of optical sensor elements each for detecting an intensity of light received, the temperature compensating sensor including: a lower-layer light blocking film; an optical sensor element for detecting a temperature of an environment in which the liquid crystal display device is placed, the optical sensor element for detecting a temperature being provided on the lower-layer light blocking film; and an upper-layer light blocking film for blocking ultraviolet light, visible light, and infrared light, the upper-layer light blocking film being provided so as to cover the optical sensor element for detecting a temperature.

According to the above configuration, the liquid crystal display device is provided with optical sensor elements each for detecting an intensity of light received and a temperature compensating sensor. Further, the temperature compensating sensor is provided with an optical sensor element for detecting a temperature. The optical sensor element for detecting a temperature can be formed concurrently with the optical sensor elements each for detecting an intensity of light received in the same process as these optical sensor elements. This makes it possible to minimize variation in characteristic between the above optical sensor elements which variation may occur because the optical sensor elements are produced in different lots.

Further, the temperature compensating sensor has a configuration in which a lower-layer light blocking film for blocking light (ultraviolet light, visible light, and infrared light) is provided below the optical sensor element for detecting a temperature. In addition, the temperature compensating sensor is provided with an upper-layer light blocking film for blocking ultraviolet light, visible light, and infrared light. This upper-layer light blocking film is provided so as to cover the optical sensor element for detecting a temperature. Therefore, unlike the case of the above-described conventional technique, the temperature compensating sensor can carry out temperature compensation of the optical sensor elements each for detecting an intensity of light received without receiving an influence of leaked infrared light.

Therefore, according to the above configuration, it is possible to attain a liquid crystal display device including an area sensor that is not influenced by a temperature of an environment where the liquid crystal display is used and accordingly provides a high detection precision.

In the liquid crystal display device of the present invention, it is preferable that the upper-layer light blocking film is a reflective film.

According to the above configuration, the temperature compensating sensor is for compensating an influence of temperature on the optical sensor elements each for detecting an intensity of light. Accordingly, in a case where the upper-layer light blocking film provided in the temperature compensating sensor is a reflective film, it is possible to suppress, by the upper-layer light blocking film, an influence of a temperature rise on the optical sensor element for detecting a temperature which temperature rise may occur due to light absorption. This makes it possible to carry out more precise temperature compensation.

Therefore, according to the above configuration, it is possible to attain a liquid crystal display device including an area sensor that is not influenced by a temperature of an environment in which the liquid crystal display device is used and accordingly provides a higher detection precision.

In the liquid crystal display device of the present invention, it is preferable that the temperature compensating sensor is provided in an outermost fringe section of a display area of the liquid crystal panel.

According to the above configuration, the upper-layer light blocking film provided in the temperature compensating sensor is made of a reflective film. An example of the reflective film is a metal film made of aluminum, silver or the like whose reflectance is high in regions of ultraviolet light, visible light, and infrared light. However, the present invention is not limited to a metal film but may use any substance that has a high reflectance in the above light wavelength regions.

However, the reflective film reflects light in a visible region, and therefore is noticeable to human eyes. As a result, in a case where the reflective film is dispersed in a center section or the like of the liquid crystal panel, the reflective film is recognized as a defect (a dot area recognized as if display were lacked in the display area) or the like.

For solving this problem, according to the above configuration, the temperature compensating sensor including the reflective film is provided in an outermost fringe section of the display area of the liquid crystal panel. This makes it possible to prevent the reflective film from being recognized as a dot defect (a dot area where display is lacked) or the like in the center section of the display area of the liquid crystal display device. Consequently, it becomes possible to prevent deterioration in display quality of the liquid crystal display device.

Further, in the above configuration, particularly in a case where the reflective film is a metal film, an influence of parasitic capacitance can also be suppressed in the center section of the display area of the liquid crystal display device.

In addition, even in one liquid crystal panel, variation in temperature is present. Accordingly, in a case where the temperature compensating sensor is provided to only one given position in the display area, the temperature compensating sensor may not be able to detect a precise temperature. Meanwhile, in a case where, as described above, the temperature compensating sensor is provided all over the area in the outermost fringe section of the display area of the liquid crystal panel, the variation in temperature in respective parts of the liquid crystal panel can be averaged. This makes it possible to carry out more precise temperature compensation.

In the liquid crystal display device of the present invention, it is preferable that: the area sensor section is provided with light intensity sensors each for detecting an intensity of light in the environment where the liquid crystal display device is placed, each of the light intensity sensors being provided in a position adjacent to a corresponding optical sensor element for detecting an intensity of light received; and the light intensity sensors each includes an optical sensor element formed on the active matrix substrate in a same process as the plurality of optical sensor elements each for detecting an intensity of light received.

According to the above configuration, characteristics of the optical sensor elements for the light intensity sensor can be identical to characteristics of the optical sensor elements for the area sensor. Accordingly, an environmental light intensity obtained by the light intensity sensor can be precisely reflected to the optical sensor elements for the area sensor. That is, it becomes possible to estimate a precise output of the area sensor with respect to environmental light.

In the liquid crystal display device of the present invention, it is preferable that: the area sensor section is provided with infrared light intensity sensors each for detecting an intensity of infrared light in the environment where the liquid crystal display device is provided, each of the infrared light intensity sensors being provided in a position adjacent to a corresponding optical sensor element for detecting an intensity of light received; and the infrared light intensity sensors each includes an optical sensor element for detection of a light intensity and an upper-layer light blocking film for absorbing ultraviolet light and visible light, the upper-layer light blocking film being provided so as to cover the optical sensor element for detection of a light intensity.

According to the above configuration, it is possible to detect an intensity of infrared light that enters from the outside. Further, the optical sensor elements each for detecting a light intensity can be formed in the same process as the optical sensor elements for the area sensor. Accordingly, an intensity of infrared light obtained of the infrared light intensity sensor can be precisely reflected on the optical sensor elements for the area sensor.

In the liquid crystal display device of the present invention, it is preferable that: in the temperature compensating sensor, the lower-layer light blocking film and the upper-layer light blocking film for blocking ultraviolet light, visible light and infrared light are made of an identical material.

According to the above configuration, the lower-layer light blocking film is made of the same material as the upper-layer light blocking film. Therefore, it is also possible to block ultraviolet light, visible light and infrared light from light that enters from a surface that is opposite to a target surface for detection. This makes it possible to carry out more precise temperature compensation.

Therefore, even when a backlight emitting light at various light wavelengths is used, it is possible to attain a liquid crystal display device including an area sensor capable of carrying out a highly precise temperature compensation.

Advantageous Effects of Invention

As described above, a liquid crystal display device of the present invention includes: a liquid crystal panel including: the liquid crystal panel including an area sensor section including a plurality of optical sensor elements each for detecting an intensity of light received, the area sensor section being for detecting the external input position by causing each of the plurality of optical sensor elements to detect the image on the panel surface, the area sensor section including the plurality of optical sensor elements each for detecting an intensity of light received, the area sensor section further including: a temperature compensating sensor for carrying out temperature compensation for each of the plurality of optical sensor elements each for detecting an intensity of light received, the temperature compensating sensor including: a lower-layer light blocking film; an optical sensor element for detecting a temperature of an environment in which the liquid crystal display device is placed, the optical sensor element for detecting a temperature being provided on the lower-layer light blocking film; and an upper-layer light blocking film for blocking ultraviolet light, visible light, and infrared light, the upper-layer light blocking film being provided so as to cover the optical sensor element for detecting a temperature.

Therefore, it is possible to attain a liquid crystal display device including an area sensor that is not influenced by a temperature of an environment in which the liquid crystal display device is used and accordingly can provide a high detection precision.

Brief Description of Drawings

Fig. 1

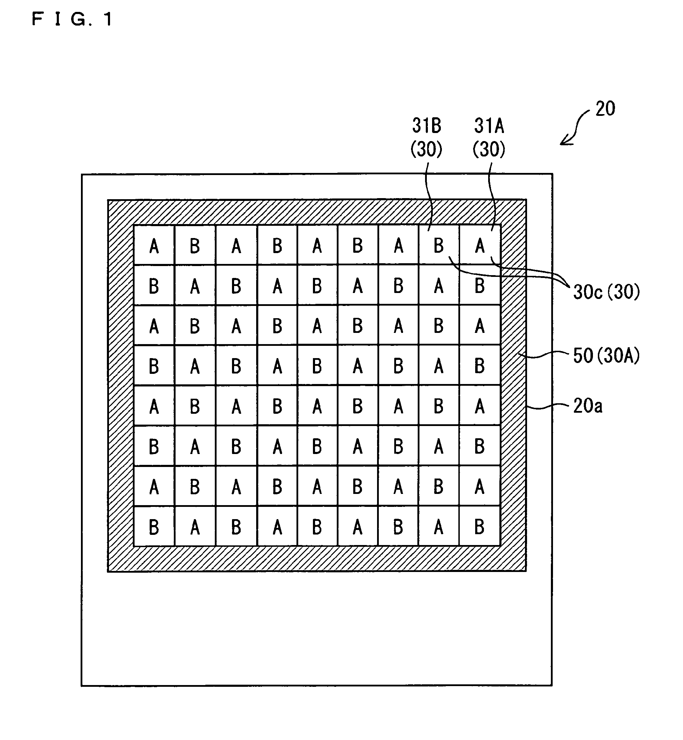

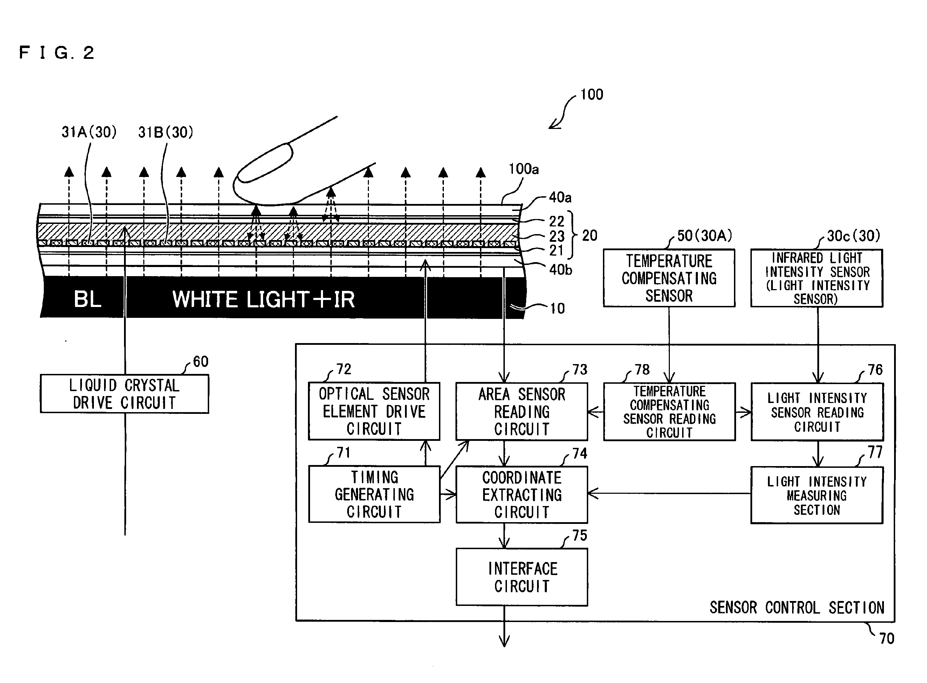

Fig. 1 is a plan view illustrating a configuration of sensors in a liquid crystal panel in a liquid crystal display device of Fig. 2.
Fig. 2
Fig. 2 is a diagram schematically illustrating a configuration of a liquid crystal display device according to an embodiment of the present invention.
Fig. 3

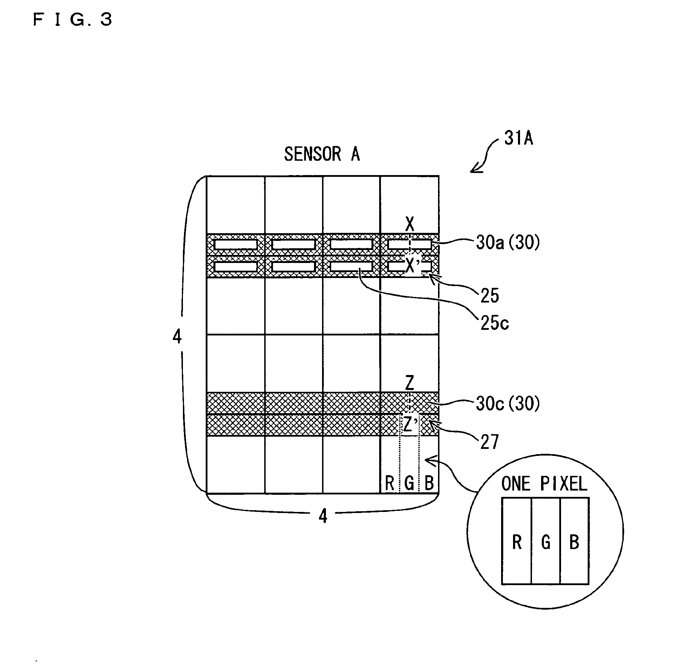

Fig. 3 is a diagram schematically illustrating a configuration of a sensor A (a visible-light sensor) provided in the liquid crystal panel of Fig. 1.
Fig. 4

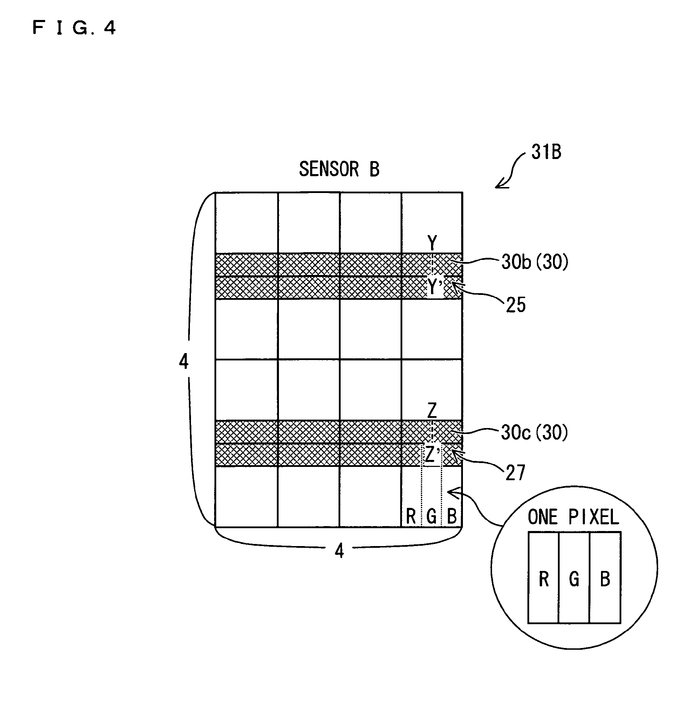

Fig. 4 is a diagram schematically illustrating a configuration of a sensor B (an infrared sensor) provided in the liquid crystal panel of Fig. 1.
Fig. 5

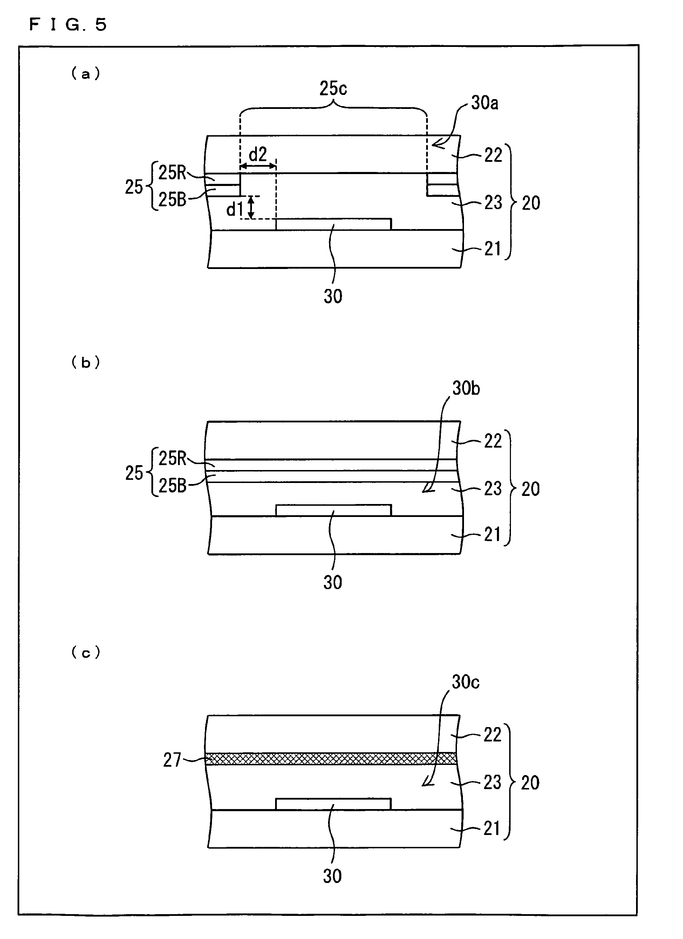

Fig. 5 is a diagram illustrating a configuration of each sensor provided in the liquid crystal panel of Fig. 1; (a) of Fig. 5 shows a cross section taken along a line X-X' in the visible-light sensor of Fig. 3; (b) of Fig. 5 shows a cross section taken along a line Y-Y' in the infrared sensor of Fig. 4; and (c) of Fig. 5 shows a cross section taken along a line Z-Z' of the visible-light sensor and the infrared sensor of Fig. 4.
Fig. 6

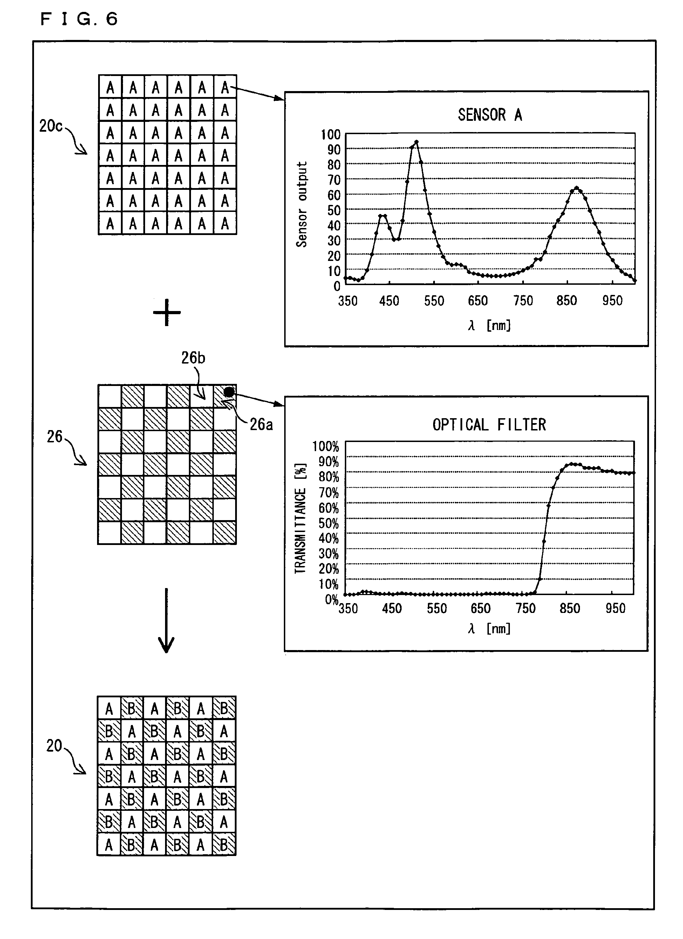

Fig. 6 is a diagram schematically illustrating a configuration of the liquid crystal panel of Fig. 1.

Fig. 7

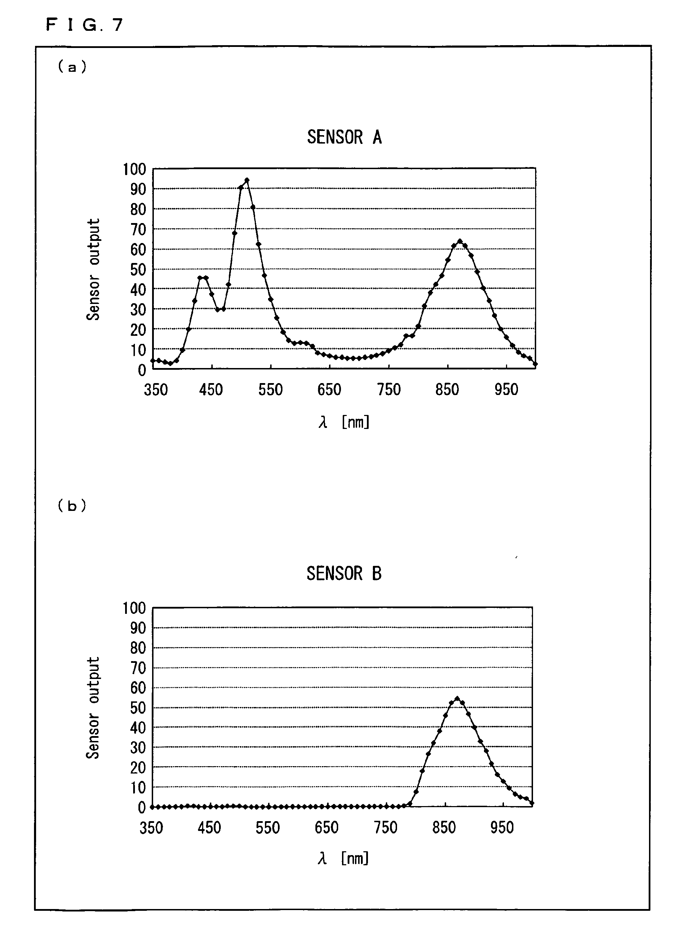

Fig. 7 is graphs each illustrating a spectral sensitivity (a sensor output at each wavelength) of each sensor provided in the liquid crystal panel 20 of Fig. 6; (a) of Fig. 7 shows a spectral sensitivity in the case of the sensor A; and (b) of Fig. 7 shows a spectral sensitivity in the case of the sensor B.
Fig. 8

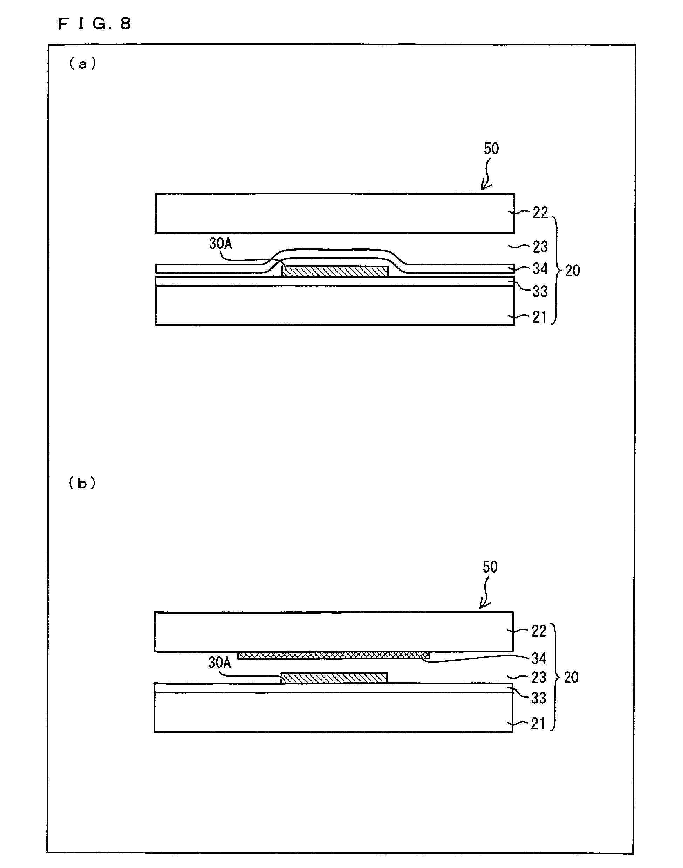

Fig. 8 is a cross sectional view schematically illustrating a temperature compensating sensor provided in the liquid crystal panel of Fig. 1; (a) of Fig. 8 shows a configuration in which an upper-layer light blocking film is provided on an active matrix substrate; and (b) of Fig. 8 shows a configuration where an upper-layer light blocking film is provided on a counter substrate.
Fig. 9

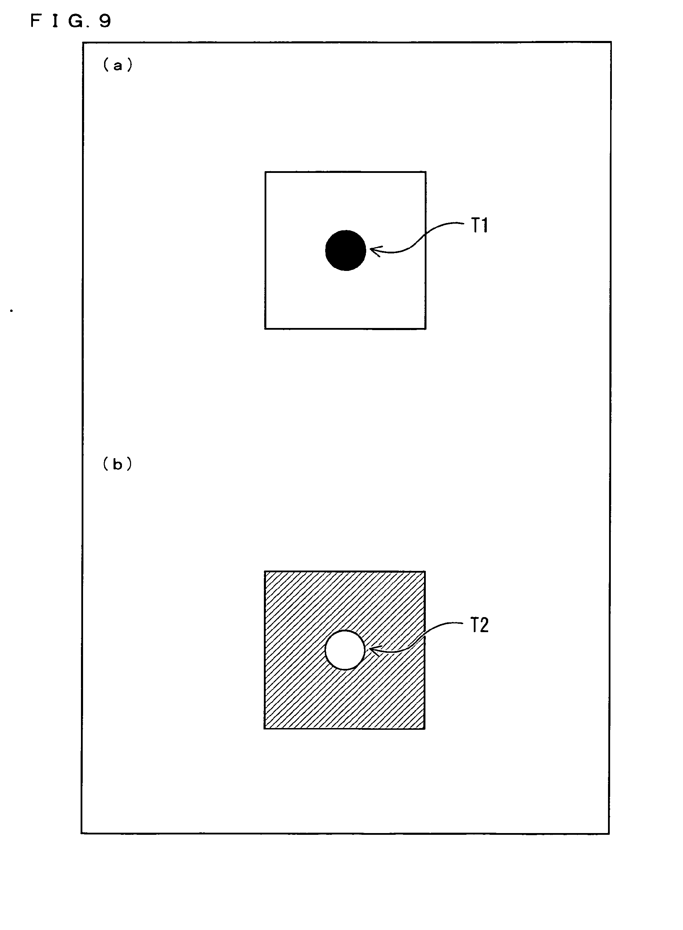

Fig. 9 is a diagram schematically illustrating an image recognized by each sensor provided in the liquid crystal panel 20 of Fig. 6; (a) of Fig. 9 shows a recognized image in a case where the sensor A is used; and (b) of Fig. 9 shows a recognized image in a case where the sensor B is used.
Fig. 10

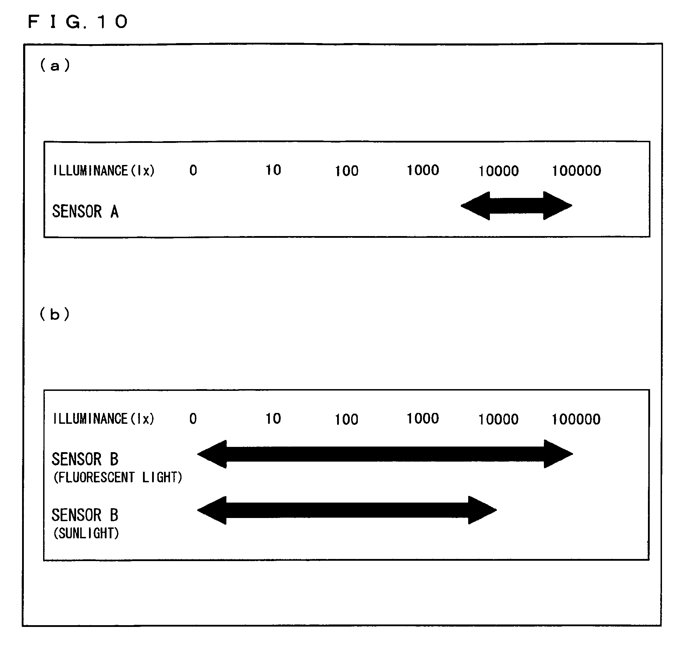

Fig. 10 is a diagram schematically illustrating a target illuminance range that is suitable in a case where detection is carried out by each sensor provided in the liquid crystal panel 20 of Fig. 6; (a) of Fig. 10 shows a target illuminance that is suitable in a case where the sensor A is used; and (b) of Fig. 10 shows a target illuminance range that is suitable in a case where the sensor B is used.
Fig. 11

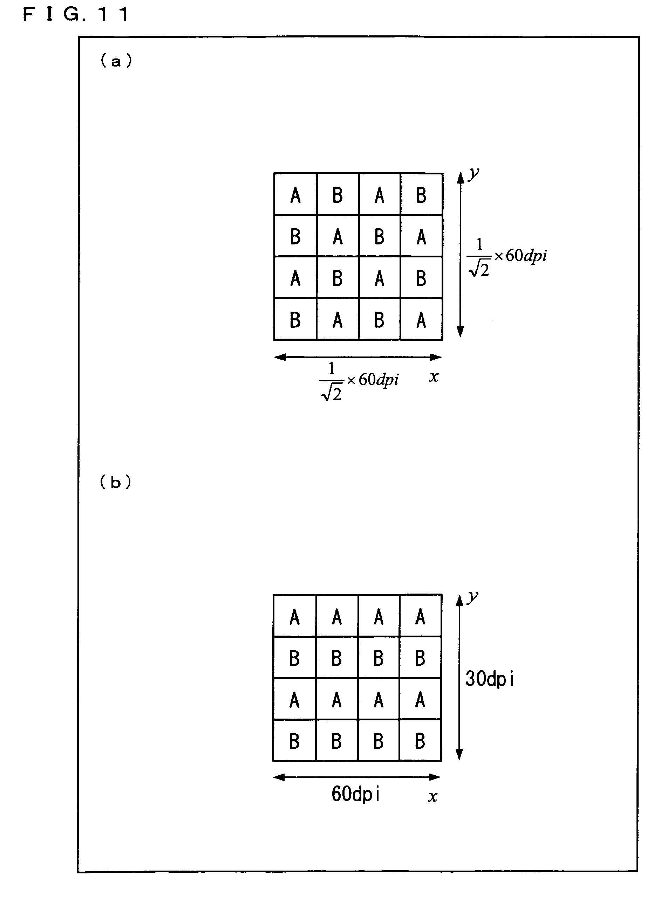

Fig. 11 is a diagram schematically illustrating exemplary configurations of a liquid crystal panel; (a) of Fig. 11 shows a case where the sensor A and the sensor B are alternately disposed in a checkerboard pattern; and (b) of Fig. 11 shows a case where a line of sensors A and a line of sensors B are alternately disposed.
Fig. 12

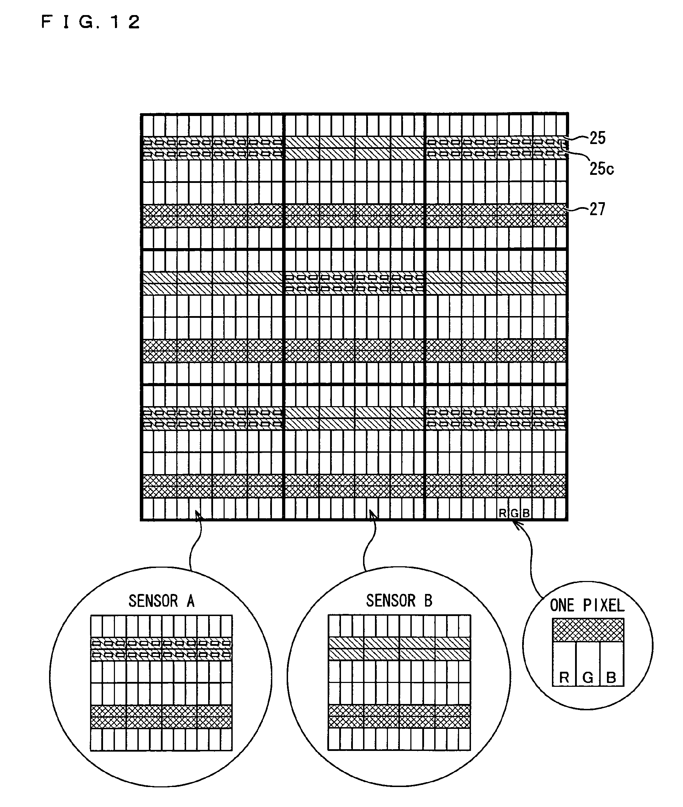

Fig. 12 is a diagram illustrating an exemplary configuration of a liquid crystal panel in which the sensor A and the sensor B are alternately disposed in a checkerboard pattern.
Fig. 13
Fig. 13 is a diagram illustrating a relation between (i) a change in environmental temperature and a change in value of current that flows in an optical sensor element in an environment where no light is present.
Fig. 14 is a diagram illustrating a transmittance of carbon black at each wavelength of light.

Description of Embodiments

The following explains one embodiment of the present invention with reference to Figs. 1 to 12. Note that the present invention is by no means limited by this embodiment.

The present embodiment explains a touch-panel-integrated liquid crystal display device that has an area sensor function (specifically, a touch panel function).

First, With reference to Fig. 2, the following explains a configuration of the touch-panel-integrated liquid crystal display device according to the present embodiment. A touch-panel-integrated liquid crystal display device 100 (also referred to simply as a liquid crystal display device 100) shown in Fig. 2 has a touch panel function. In the touch panel function, an optical sensor element provided in each pixel detects an image on a surface of a display panel so that an input position is detected.

As shown in Fig. 2, the touch-panel-integrated liquid crystal display device 100 of the present embodiment includes a liquid crystal panel 20 (area sensor section), and a backlight 10 provided on a backside of the liquid crystal panel 20. The backlight 10 illuminates the liquid crystal panel.

The liquid crystal panel 20 includes an active matrix substrate 21 on which a number of pixels are provided in a matrix form, and a counter substrate 22 that is provided so as to be opposed to the active matrix substrate 21. Further, the liquid crystal panel 20 is configured to include a liquid crystal layer 23, as a display medium, between these two substrates. Note that in the present embodiment, a mode of the liquid crystal panel 20 is not specifically limited but may be any display mode, for example, a TN mode, an IPS mode, or a VA mode.

On outer sides of the liquid crystal panel 20, a front polarizing plate 40a and a back polarizing plate 40b are provided so as to sandwich the liquid crystal panel 20.

The polarizing plates 40a and 40b each serves as a polarizer. For example, when a vertical-alignment-mode liquid crystal material is sealed in the liquid crystal layer, a normally black mode liquid crystal display device can be attained by arranging a polarization direction of the front polarizing layer 40a and a polarization direction of the back polarizing layer 40b in crossed Nicols.

The active matrix substrate 21 is provided with TFTs (not shown) that are switching elements for driving respective pixels, an alignment film (not shown), visible-light sensors 31A (area sensor section), infrared light sensors 31B (area sensor section), and temperature compensating sensors 50. Each of the visible-light sensors 31A and the infrared light sensors 31B is configured to include an optical sensor element 30 that is provided in each pixel area. Further, each temperature compensating sensor 50 is configured to include an optical sensor element 30A provided in each pixel area. The optical sensor element 30 and the optical sensor element 30A cause current having different values to flow therein in accordance with respective amounts of light received.

Further, in each of the visible-light sensors 31A and the infrared light sensors 31B, infrared light intensity sensors (light intensity sensors) 30c are provided in positions adjacent to optical sensor elements 30 (more specifically, optical sensor elements 30a or 30b) constituting an area sensor. Each infrared light intensity sensor 30c detects an intensity of infrared light in an environment where the liquid crystal display device 100 is placed.

Further, on the counter substrate 22, a color filter layer, a common electrode, an alignment film and the like (which are not shown) are formed. The color filter layer includes colored sections each having a color of red (R), green (G), or blue (B), and a black matrix.

As described above, the touch-panel-integrated liquid crystal display device 100 of the present embodiment is provided with an optical sensor element 30 in each pixel area. Thereby, the visible-light sensors 31A and the infrared light sensors 31B are formed. This provides an area sensor that detects an external input position by causing each of the visible-light sensors 31A and the infrared light sensors 31B to detect an image on a panel surface. When a finger or an input pen touches a specific position on the surface (a target surface 100a for detection) of the liquid crystal panel 20, the optical sensor elements 30 can recognize the position and can input information into the device or execute an intended operation. In this way, in the liquid crystal display device 100 of the present invention, a touch panel function can be attained by use of the optical sensor elements 30.

The optical sensor element 30 is made of a photodiode or a phototransistor. The optical sensor element 30 causes a current flow in accordance with an intensity of light received, thereby detecting an amount of light received. The TFTs and the optical sensor elements 30 may be monolithically formed on the active matrix substrate 21 by using substantially identical processes. In other words, a part of constituent members of each optical sensor element 30 may be formed concurrently with a part of constituent members of each TFT. Such optical sensor elements may be formed according to a conventionally known method for producing a liquid crystal display device including optical sensor elements.

The temperature compensating sensor 50 is a correction sensor. This correction sensor is for carrying out temperature compensation for each of the optical sensor elements 30 provided in each of the visible-light sensors 31A and the infrared light sensors 31B. In the present embodiment, as an optical sensor element constituting the temperature compensating sensor 50, the optical sensor element 30A is used. This optical sensor element 30A has an identical configuration as the optical sensor element 30 constituting the area sensor. In other words, the optical sensor element 30A constituting the temperature compensating sensor 50 and the optical sensor element 30 constituting the area sensor are formed on the active matrix substrate 21 according to an identical design and in an identical process (production process). A specific configuration of the temperature compensating sensor 50 is explained later.

Further, the infrared light intensity sensor 30c is for measuring an intensity of infrared light in an environment where the liquid crystal display device 100 is placed. As shown in Fig. 3, the infrared light intensity sensor 30c is provided in a position adjacent to an optical sensor element 30a in a visible-light sensor 31A. Further, as shown in Fig. 4, the infrared light intensity sensor 30c is provided in a position adjacent to an optical sensor element 30b in an infrared light sensor 31B. The optical sensor element 30 constituting the infrared light intensity sensor 30c has an identical configuration as the optical sensor elements 30a and 30b constituting the area sensor. That is, the optical sensor element 30 (an optical sensor element for detecting a light intensity) constituting the infrared light intensity sensor 30c and the optical sensor elements 30a and 30b respectively constituting the visible-light sensor 31A and the infrared light sensor 31B are formed on the active matrix substrate 21 according to an identical design and in an identical process (production process).

The backlight 10 is for illuminating the liquid crystal panel 20. In the present embodiment, the backlight 10 emits infrared light, in addition to white light, onto the liquid crystal panel 20. Such a backlight emitting light including infrared light can be obtained by a well-known method.

Further, Fig. 2 shows a liquid crystal drive circuit 60 for performing display drive on the liquid crystal panel 20 and a sensor control section 70 for driving the area sensor, the infrared light intensity sensor 30c and the temperature compensating sensor 50. Further, Fig. 2 shows an internal configuration of the sensor control section 70. Note that a conventionally known configuration can be applied to the configurations of the liquid crystal drive circuit of the present embodiment.

As shown in Fig 2, the sensor control section 70 includes a timing generating circuit 71, a light sensor element drive circuit 72, an area sensor reading circuit 73, a coordinate extracting circuit 74, an interface circuit 75, a light intensity sensor reading circuit 76, a light intensity measuring section 77, and a temperature compensating sensor reading circuit 78.

The timing generating circuit 71 generates a timing signal used for controlling operations of respective circuits so that the operations synchronize.

The optical sensor element drive circuit 72 supplies an electric source for driving the optical sensor elements 30 respectively constituting the area sensor and the light intensity sensor 30c, and the optical sensor elements 30A each constituting the temperature compensating sensor 50.

The area sensor reading circuit 73 receives a received-light signal from the optical sensor elements 30 (specifically, the optical sensor elements 30a and 30b) each constituting the area sensor. Then, the area sensor reading circuit 73 calculates the intensity of the light received from an obtained current value. Note that, in the present embodiment, the area sensor reading circuit 73 is configured to send, to the coordinate extracting circuit 74, a value obtained by subtracting a current value received from the optical sensor element 30A provided in the temperature compensating sensor 50 (a dark current expectation value sent from the temperature compensating sensor reading circuit 78) from a current value (sensor output) received from the optical sensor element 30 constituting the area sensor. As a result, temperature compensation is carried out for the area sensor.

The coordinate extracting circuit 74 calculates finger coordinates where a finger touches the surface (the target surface 100a for detection) of the liquid crystal panel, based on the current value (an output of the area sensor after temperature compensation) calculated by the area sensor reading circuit 73.

The interface circuit 75 outputs, outside the liquid crystal display device 100, information (positional information) regarding the finger coordinates that has been calculated by the coordinate extracting circuit 74. The liquid crystal display device 100 is connected to a PC or the like via this interface circuit 75.

The light intensity sensor reading circuit 76 receives a received-light signal from the optical sensor element 30 in the infrared light intensity sensor 30c. Then, the light intensity sensor reading circuit 76 calculates an amount of light received from an obtained current value.

Note that in the present embodiment, the light intensity sensor reading circuit 76 is configured to send, to the light intensity measuring section 77, a value obtained by subtracting a current value received from the optical sensor element 30A provided in the temperature compensating sensor 50 (a dark current expectation value sent from the temperature compensating sensor reading circuit 78) from a current value received from the optical sensor element 30 constituting the infrared light intensity sensor 30c. As a result, temperature compensation is carried out for the infrared light intensity sensor 30c.

The light intensity measuring section 77 calculates an intensity of infrared light in an environment where the device is placed, based on a current value (an output of the infrared light intensity sensor after the temperature compensation) calculated by the light intensity sensor reading circuit 76. Here, based on the obtained intensity of environmental light, the coordinate extracting circuit 74 determines whether to extract a received-light signal from the optical sensor element 30 in the visible-light sensor 31A or a received-light signal from the optical sensor element 30 in the infrared light sensor 31B. This makes it possible to use as appropriate either the visible-light sensor 31A or the infrared light sensor 31B in accordance with an intensity of surrounding infrared light.

Further, the temperature compensating sensor reading circuit 78 calculates a value (this value is called an dark current expectation value) of current that flows in the optical sensor element 30A (optical sensor element for detecting a temperature) in the temperature compensating sensor 50. Then, the temperature compensating sensor reading circuit 78 sends the calculated value of current to the above-described area sensor reading circuit 73 and the light intensity sensor reading circuit 76.

The liquid crystal display device 100 has a configuration as described above. Therefore, when a finger or an input pen touches a surface (target surface 100a for detection) of the device, the liquid crystal display device 100 can detect an input position by causing the optical sensor elements 30 formed in the liquid crystal panel 20 to recognize the finger or the input pen as an image.

Next, the following explains configurations of respective sensors (the visible-light sensor 31A, the infrared light sensor 31B, the infrared light intensity sensor 30c and the temperature compensating sensor 50) provided in the liquid crystal panel 20. In the following explanation, the visible-light sensor 31A is referred to as a sensor A, and the infrared light sensor 31B is referred to as a sensor B.

Fig. 1 schematically illustrates a configuration of sensors in a display area (active area) 20a of the liquid crystal panel 20. Though Fig. 1 does not show a specific configuration of an inside of the liquid crystal panel 20, a plurality of data signal lines and a plurality of gate signal lines are provided so as to intersect each other in the liquid crystal panel 20 and at a position in the vicinity of each intersection, a pixel electrode is provided via a TFT in the liquid crystal panel 20. Further, in the color filter layer provided on the counter substrate 22 of the liquid crystal panel 20, the colored sections each having a color of red (R), green (G), or blue (B) are formed. As a result, red, green, and blue pixel electrodes can be obtained. One pixel is formed by three pixel electrodes including an R pixel electrode, a G pixel electrode, and a B pixel electrode. In the liquid crystal panel 20, a plurality of pixels are provided in rows and columns in a matrix form.

As shown in Fig. 1, in the liquid crystal panel 20 of the present embodiment, the optical sensor element 30A provided in each pixel disposed in an outermost fringe area of the display area 20a is used as the temperature compensating sensor 50. In Fig. 1, the area where the temperature compensating sensor 50 is disposed is shaded.

Further, the optical sensor element 30 is provided in each pixel in an area other than the outermost fringe area in the display area 20a. Such an optical sensor element constitutes one of the sensor A, the sensor B, or the infrared light intensity sensor 30c. As shown in Fig. 1, the sensors A and the sensors B are provided in rows and columns in a matrix form in accordance with disposition of the pixels. In addition, in the present embodiment, the sensor A and the sensor B are provided alternately in a checkerboard pattern. Further, the infrared light intensity sensor 30c is provided for each one of the sensors A and B.

Fig. 3 illustrates a configuration of the sensor A in more detail. Moreover, Fig. 4 illustrates a configuration of the sensor B in more detail. As shown in Figs. 3 and 4, each of one unit of sensor A and one unit of sensor B includes 16 pixels (4 pixels x 4 pixels) in total. Note that, as described above, one pixel is made of the three pixel electrodes of R, G, and B.

As shown in Fig. 3, the sensor A includes a plurality of optical sensor elements 30. The plurality of optical sensor elements 30 are divided into two kinds, that is, the optical sensor elements 30a each for detecting an intensity of visible light received and the optical sensor elements 30 each constituting the infrared light intensity sensor 30c.

Further, as shown in Fig. 4, the sensor B includes a plurality of optical sensor elements. The plurality of optical sensor elements here are divided into two kinds, that is, the optical sensor elements 30b each for detecting an intensity of infrared received and the optical sensor elements 30 each constituting the infrared light intensity sensor 30c.

(a) to (c) of Fig. 5 illustrates cross sectional configurations of the optical sensor element 30a, the optical sensor element 30b, and the infrared light intensity sensor 30c, respectively. (a) of Fig. 5 shows a cross sectional configuration taken along a line X-X' in the visible sensor 31A of Fig. 3. (b) of Fig. 3 shows a cross sectional configuration taken along a line Y-Y' in the infrared light sensor 31B of Fig. 4. (c) of Fig. 5 shows a cross sectional configuration taken along a line Z-Z' of the infrared light intensity sensor 30c.

The optical sensor element 30a shown in (a) of Fig. 5 includes an optical sensor element 30 formed on the active matrix substrate 21. The configuration of the optical sensor element 30a for detecting an intensity of visible light can be identical to a configuration of an optical sensor element provided in a conventional touch-panel-integrated liquid crystal display device.

The optical sensor element 30b shown in (b) of Fig. 5 includes an optical sensor element 30 formed on the active matrix substrate 21, as in the optical sensor element 30a. Further, the optical sensor element 30b is provided with an optical filter 25 that blocks visible light, in a position corresponding to an area where the optical sensor element 30 is provided on the counter substrate 22. The optical filter 25 has a multilayer structure including a red color filter 25R and a blue color filter 25B that form the colored sections of the color filter layer. This makes it possible to block a visible light component out of components of incident light that enters the optical sensor element 30.

Note that in the present embodiment, as shown in (a) of Fig. 5, in the optical sensor element 30a, an optical filter 25 is provided on the counter substrate 22 in an area where the optical sensor element 30 is provided. This optical filter 25 has the same structure as the optical filter 25 provided for the optical sensor element 30b. Further, in a section right above the optical sensor element 30, an aperture section 25c is provided. This aperture section 25c is for transmitting light (light in all wavelength regions). In this way, the optical filter 25 is provided in the sensor A. This makes it possible to prevent a display from appearing in different ways in the pixel including the sensor A and in the pixel including the sensor B.

Here, on an assumption that a distance between the optical sensor element 30 and the optical filter 25 is d1 in a direction in which the layers are laminated on the substrate, a distance d2 between an end of the optical sensor element 30 and an end of the optical filter 25 (an end of the aperture section 25c) in a direction along a substrate surface preferably has a value that is equal to or lower than the following value.

$$d2 = d1 + \alpha$$

where the $\alpha$ is a value (distance) obtained by adding a tolerance in bonding between the active matrix substrate 21 and the counter substrate 22 to a finished dimensional tolerance of the optical sensor element 30 and the optical sensor filter 25. This makes it possible in the sensor A to reliably prevent the optical sensor element 30 and the optical filter 25 from being disposed in an overlapped manner in a case where the sensor A is viewed from a panel surface.

The infrared light intensity sensor 30c shown in (c) of Fig. 5 includes an optical sensor element 30 formed on the active matrix substrate 21, in the same manner as the visible-light sensor and the infrared light sensor. Note that as a configuration that is different from those of the optical sensor elements 30a and 30b, the optical sensor element 30c is provided with a black matrix 27 (upper-layer light blocking film) for absorbing ultraviolet light and visible light in a position on the counter substrate 22 which position corresponds to an area where the optical sensor element 30 is disposed. Here, the black matrix 27 is made of carbon black. Therefore, as shown in Fig. 14, though ultraviolet light and visible light are not transmitted, infrared light is transmitted.

This makes it possible to exclude photocurrent that occurs due to intensities of ultraviolet light and visible light from photocurrent obtained by the optical sensor element 30c and consequently to detect photocurrent that occurs due to an intensity of only infrared light. As a result, the infrared light intensity sensor 30c can detect an intensity of infrared light in an environment in which the liquid crystal display device 100 is placed.

Note that a light receiving sensitivity of the optical sensor element 30 constituting the infrared light intensity sensor 30c is lower by a predetermined ratio than a light receiving sensitivity of the optical sensor element 30b constituting the infrared light sensor 31B. That is, the light receiving sensitivity of the optical sensor element 30 constituting the infrared light intensity sensor 30c is 1/n (where n is any number that is greater than 1) of the light receiving sensitivity of the optical sensor element 30b. This makes an output of the infrared light intensity sensor 30c lower than that of the infrared light sensor 31B, and also causes the output of the infrared light intensity sensor 30c to be saturated when the infrared light intensity is higher than an infrared light intensity at the time when the output of the infrared light sensor 31B is saturated. This prevents saturation of the output of the infrared light intensity sensor 30c in an illuminance range to be measured. As a result, it becomes possible to precisely measure an environmental illuminance in a wide range.

The followings are examples of a configuration for lowering by a predetermined ratio the light receiving sensitivity of the optical sensor element 30 constituting the infrared light intensity sensor 30c than that of the optical sensor element 30b.

That is, one example of the above configuration is a configuration in which among n (where n is an integer equal to or greater than 2) optical sensor elements 30 constituting the infrared light intensity sensor 30c, only one light sensor element 30 is connected to the optical sensor element drive circuit 72 via a wiring (e.g., a data signal line) for driving this sensor element. In other words, (n - 1) optical sensor elements 30 are separated from the optical sensor element drive circuit 72 and not connected to the optical sensor element drive circuit 72. Because each of the optical sensor elements 30 that are not connected to the optical sensor element drive circuit 72 does not function as the infrared light intensity sensor 30c, only one optical sensor element 30 among the n optical sensor elements 30 functions as the infrared light intensity sensor 30c in the above arrangement.

Alternatively, as another example of the configuration in which the light receiving sensitivity of the infrared light intensity sensor 30c is set to 1/n, it is possible to have a configuration in which the number of the optical sensor elements 30 constituting the infrared light intensity sensor 30c is reduced (that is, only the optical sensor elements that are connected to the optical sensor element drive circuit 7.2 are formed).

A still another example of such a configuration is a configuration in which a light reducing filter for reducing an amount of transmitted light (an amount of light that enters through the panel surface 100a) to 1/n (where n is a number greater than 1) is provided above each optical sensor element 30 constituting the infrared light intensity sensor 30c.

As such a light reducing filter, a broadband ND filter can be used. The ND filter is a filter for uniformly reducing a spectral transmittance and there are a light absorbing ND filter, a reflective ND filter, and a complex ND filter.

According to the above configuration by lowering by a predetermined ratio the light receiving sensitivity of the optical sensor element for the infrared light intensity sensor, it is possible to precisely measure an environmental light intensity in a wide range.

In the liquid crystal panel 20 of the present embodiment, it can be said that, depending on whether or not the optical filter 25 is provided above the optical sensor element 30 having a conventional configuration (that is, whether or not the aperture section 25c is provided in the optical filter 25 formed above the optical sensor element 30), the two kinds of sensors A and B are respectively attained. In this point, the following explains with reference to Figs. 6 and 7.

Fig. 6 shows an example for attaining a liquid crystal panel of the present embodiment by combining the optical filter 26 and the liquid crystal panel 20c including the sensor A. Note that an upper-right graph of Fig. 6 is a graph showing a spectral sensitivity (a sensor output at each wavelength) of the sensor A and a middle-right graph shows a spectral transmittance (a transmittance of light at each wavelength) of the visible light blocking section 26a provided in the optical filter structure 26.

The liquid crystal panel 20c of Fig. 6 has a configuration in which the above-described sensors A (visible-light sensors) are disposed in rows and columns in a matrix form. Here, as shown in the upper-right graph, the sensor A has a certain level of sensitivity in all wavelength regions from visible light to infrared light.

Further, the optical filter structure 26 shown in Fig. 6 has a configuration in which the visible light blocking section 26a and the visible light transmitting section 26b are alternately disposed in a checkerboard pattern.

The middle-right graph of Fig. 6 shows a spectrum transmittance in the visible light blocking section 26a of the optical filter structure 26. As shown in this graph, the visible light blocking section 26a blocks visible light (i.e., light at a wavelength equal to or less than 780 nm). For a material of the visible light blocking section 26a, any material can be used as long as the material can block visible light (that is, light at a wavelength equal to or less than 780 nm) and transmit infrared light.

A specific example of a structure of the visible light blocking section 26a is a structure in which a red color filter and a blue color filter are laminated as in the optical filter 25 as described above. By combining the red and blue color filters, visible light can be reliably blocked. In addition, this configuration also has an advantage such that the optical filter structure 26 can be incorporated in the color filter layer provided on the counter substrate 22 of the liquid crystal panel 20.

In the visible light transmitting section 26b of the optical filter structure 26, an aperture section is formed in a position corresponding to a light receiving section of the optical sensor element 30a of the sensor A. This allows light in all wavelength regions to enter the light receiving section of the optical sensor element 30a. Note that an area other than the aperture section of the visible light transmitting section 26b is formed by an RB filter (an optical filter obtained by laminating an R color filter and a B color filter).

Fig. 12 schematically illustrates a structure in which the sensor A in which the aperture section 25c is formed in the optical filter 25 and the sensor B in which the optical filter 25 that does not have an aperture section are alternately disposed.

By inserting the optical filter structure 26 in the liquid crystal panel 20c, it is possible to obtain the liquid crystal panel 20 in which the sensor A and the sensor B are alternately disposed in a checkerboard pattern as shown in Fig. 6. (a) of Fig. 7 shows a spectral sensitivity of the sensor A of the liquid crystal panel 20 as shown in Fig. 6, and (b) of Fig. 7 shows a spectral sensitivity of the sensor B of the liquid crystal panel 20 as shown in Fig. 6.

It is clear from (a) of Fig. 7 that the sensor A responds to wavelengths in a visible region and an infrared region and is capable of detecting an intensity of light including both visible light and infrared light. Meanwhile, it is clear from (b) of Fig. 7 that the sensor B responds to only a wavelength in an infrared region and is capable of detecting an intensity of infrared light.

Due to the above configuration, in the liquid crystal panel 20, two kinds of optical sensors, that is, the sensor A and the sensor B can respectively detect an image on a panel surface. In other words, in the liquid crystal panel 20, detection of an input position is possible in two ways, i.e., (i) detection of an input position by using a touch panel function with use of the sensor A and (ii) detection of an input position by using a touch panel function with use of the sensor B.

Next, the following explains the temperature compensating sensor 50 that is another sensor provided in the liquid crystal panel 20.

As shown in Fig. 1, in the outermost fringe area of the display area of the liquid crystal panel 20 of the present embodiment, the temperature compensating sensor 50 is provided. That is, the temperature compensating sensor 50 is made of optical sensor elements 30A formed in respective pixels positioned in an outermost periphery of the pixels provided in rows and columns in a matrix form in the display area. The temperature compensating sensor 50 is provided so as to surround a periphery of a group of the sensors A and the sensors B provided in a matrix form.

In this way, in the present embodiment, the temperature compensating sensor 50 is made of each of a plurality of optical sensor elements 30A provided in the outermost fringe area of the display area. Moreover, in the present embodiment, an average value is taken from received-light amounts each obtained by each optical sensor element 30A constituting the temperature compensating sensor 50 and used for temperature compensation.

Fig. 8 illustrates a configuration of the temperature compensating sensor 50 provided in the liquid crystal display device 100 of the present embodiment. (a) of Fig. 8 is a diagram illustrating a configuration in which the upper-layer light blocking film 34 is provided on the active matrix substrate 21. Meanwhile, (b) of Fig. 8 is a diagram showing a configuration where the upper-layer light blocking film 34 is provided on the counter substrate 22.

The temperature compensating sensor 50 is for carrying out temperature compensation for respective optical sensor elements constituting an area sensor. The temperature compensating sensor 50 includes a lower-layer light blocking film 33, optical sensor elements 30A (optical sensor element for detecting a temperature) provided on the lower-layer light blocking film 33, and the upper-layer light blocking film 34 provided so as to cover the optical sensor elements 30A and block ultraviolet light, visible light, and infrared light.

The lower-layer light blocking film 33 is provided each optical sensor element 30A. This lower-layer light blocking film 33 is for blocking light (ultraviolet light, visible light, and infrared light) that is entering the optical sensor element 30A through the substrate 21 (from a side provided with the backlight 10). The optical sensor element 30A has an identical configuration to that of the optical sensor element 30A that functions as the area sensor. However, in combination with the lower-layer light blocking film 33 and the upper-layer light blocking film 34, the optical sensor element 30A functions as an optical sensor element for detecting a temperature of an environment in which the liquid crystal display device 100 is placed.

Note that the liquid crystal display device 100 of the present embodiment can employ either of (i) the configuration in which, as shown in (a) of Fig. 8, the upper-layer light blocking film 34 is provided on the active matrix substrate 21, for example, a configuration in which the upper-layer light blocking film 34 is provided so as to be in a direct contact with the optical sensor element 30A for detecting a temperature and (ii) the configuration in which, as shown in (b) of Fig. 8, the upper-layer light blocking film 34 is provided on the counter substrate 22, for example, a configuration in which the upper-layer light blocking film 34 is provided so as to have a predetermined distance from the optical sensor element 30A for detecting a temperature.

In a case where the upper-layer light blocking film 34 provided in the temperature compensating sensor 50 is made of a material that absorbs light, a temperature of the upper-layer light blocking film 34 rises due to absorption of light. This may influence the optical sensor element 30A provided in the temperature compensating sensor 50. Accordingly, it is more preferable to use the configuration in which, as shown in (b) of Fig. 8, the upper-layer light blocking film 34 is provided so as to have a predetermined distance from the optical sensor element 30A for detecting a temperature.

Here, the optical sensor elements 30A each for detecting a temperature and which optical sensor elements 30A are provided in the temperature compensating sensor 50 are formed concurrently with the optical sensor elements 30 constituting the area sensor in the same production process as these optical sensor elements 30. Accordingly, it is possible to minimize variation in characteristic between the optical sensor elements 30 and the optical sensor elements 30A which variation may occur in a case where the optical sensor element 30 and the optical sensor element 30A are produced in different lots.

Further, as shown in Fig. 8, the temperature compensating sensor 50 is provided so as to cover the optical sensor element 30A for detecting a temperature and configured so as to include the upper-layer light blocking film 34 for blocking ultraviolet light, visible light, and infrared light. Therefore, unlike the case of the above-described conventional technique, the temperature compensating sensor 50 can carry out temperature compensation of the optical sensor elements 30 while the temperature compensating sensor 50 is not influenced by leaked infrared light. Note that a material of the upper-layer light blocking film 34 is not specifically limited and any material can be used as long as the material has a function to block ultraviolet light, visible light, and infrared light. An example of the material capable of blocking ultraviolet light, visible light, and infrared light is metal.

Therefore, in the above configuration, it is possible to attain the liquid crystal display device 100 including an area sensor that is not influenced by a temperature of the environment where the liquid crystal display device 100 is used and that has a high detection precision.

Further, the temperature compensating sensor 50 is for compensating an influence of a temperature of the optical sensor element 30. Accordingly, though any material can be used for the upper-layer light blocking film 34 as long as the material is capable of blocking ultraviolet light, visible light and infrared light, the upper-layer light blocking film 34 is preferably a reflective film that reflects light.

In the above configuration, in the upper-layer light blocking film 34, it is possible to suppress an influence of a temperature rise caused by light absorption which influence is on the temperature compensating sensor 50. This makes it possible to perform more precise temperature compensation.

Therefore, the upper-layer light blocking film 34 can be a metal film made of, for example, aluminum or silver whose reflectance is high in regions of ultraviolet light, visible light and infrared light. However, the present invention is not limited to such a metal film. The present invention can employ any substance having a high reflectance in the above light wavelength regions.

In the present embodiment, as the upper-layer light blocking film 34, an aluminum film having a high reflectance in the regions of ultraviolet light, visible light, and infrared light was used.

Further, as shown in Fig. 1, the temperature compensating sensor 50 is preferably provided in an outermost fringe section of the display area of the liquid crystal panel 20 provided in the liquid crystal display device 100 of the present embodiment.

As described above, the upper-layer light blocking film 34 provided in the temperature compensating sensor 50 is preferably made of a reflective film. However, a reflective film reflects light in a visible region and is noticeable to human eyes. Therefore, in a case where the reflective film is dispersed in the display area 20a of the liquid crystal panel 20, the reflective film is recognized as a defect (a dot area recognized as if display were lacked in the display area) or the like.

According to the above configuration, by providing the temperature compensating sensor 50 including the reflective film in the outermost fringe section of the display area of the liquid crystal panel 20, it can be prevented that the reflective film is recognized as a dot defect (a dot area where display is lacked) or the like in the display area of the liquid crystal display device 100. This makes it possible to prevent display quality of the liquid crystal display device 100 from being deteriorated.

Further, according to the above configuration, particularly in a case where the reflective film is a metal film, it is also possible to prevent an influence of parasitic capacitance or the like in the display area of the liquid crystal display device 100.

In addition, even within one display panel 20, variation in temperature occurs. Accordingly, in a case where the temperature compensating sensor is provided only to one given position in the display area, a precise temperature may not be obtained. Meanwhile, in a case where a plurality of temperature compensating sensors 50 are provided all over the area in the outermost fringe section of the display area of the liquid crystal panel 20 as in the present embodiment, it is possible to more precisely detect a temperature of an environment where the liquid crystal panel is placed by taking an average of detection results obtained from the respective temperature compensating sensors 50. This makes it possible to perform more precise temperature compensation.

Next, the following explains a method for detecting an input position in the liquid crystal display device 100 of the present embodiment.

In the liquid crystal display device 100 of the present embodiment, in accordance with an intensity of infrared light detected by the infrared light intensity sensor 30c, detection of a position by use of the visible-light sensor 31A (sensor A) is switched to detection of a position by use of the infrared light sensor 31B (sensor B) and vice versa. This switching of the sensors can be determined by focusing on a point such that the use of which sensor provides more precise detection of a position in a specific illuminance range.

Here, the following explains an illuminance range in which each of the sensor A and the sensor B is strong in detection (an illuminance range in which a precise detection of a position is possible) and an illuminance range in which each of the sensor A and the sensor B is weak in detection (an illuminance range where an error may occur in detection of a position).

(a) and (b) of Fig. 9 illustrate how a section touched on the panel surface is recognized by the sensor control section 70 in a case where the sensor A is used and in a case where the sensor B is used. (a) of Fig. 9 illustrates a case where the sensor A is used, whereas (b) of Fig. 9 illustrates a case where the sensor B is used.

In a case where the sensor A is used, as shown in (a) of Fig. 9, a section T1 touched with a finger or the like becomes a darker image as compared to other sections. This is because external light is blocked at the touched section and an amount of light received by each of the optical sensor elements 30a become less than that in other areas. Meanwhile, in a case where the sensor B is used, as shown in (b) of Fig. 9, a touched section T2 becomes brighter image as compared to other sections. The reason for this is as follows. That is, the backlight 10 of the liquid crystal display device 100 emits light including infrared light and at the touched section, infrared light is reflected by a finger or the like that touches the panel surface. On the other hand, in a section that is not touched, infrared light proceeds out of the liquid crystal panel (See Fig. 2).

Because the sensor A has the above characteristic, a preferable illuminance range at the time when the detection of a position is carried out by the sensor A is a relatively bright range from 10,000 lx to 100,000 lx as shown in (a) of Fig. 10. This is because in a dark environment, it is difficult to distinguish a touched section and an untouched section. Moreover, particularly in a case where a bright image display such as while display is carried out in the liquid crystal panel 20 and a finger or the like touches the bright image display area, the touched section is also recognized by the sensor A as a bright image. As a result, an erroneous recognition tends to occur.

Meanwhile, because the sensor B has the above-described characteristic, a preferable illuminance range at the time when detection of a position is carried out by the sensor B becomes as shown in (b) of Fig. 10. As shown in (b) of Fig. 10, in a case where external light is illumination light of fluorescent light, a preferable detection of a position can be carried out in all illuminance ranges (specifically, in a range of 0 lx to 100,000 lx). This is because fluorescent light does not include infrared light and therefore the detection of a position is possible without receiving an influence of an intensity of environmental light. On the other hand, in a case where the external light is sunlight, a preferable illuminance range becomes a relatively dark range of 0 lx to 10,000 lx. The reason for this is as follows. That is, sunlight includes infrared light and an intensity of infrared light becomes high in a case where the sunlight is intense. As a result, the optical sensor elements 30b in an untouched section also detect infrared light.

In a case where a preferable light intensity range at the time when the detection of a position is carried out by the sensor B is expressed by an intensity of infrared light, a preferable detection of a position is possible if the intensity of infrared light in an environment where the liquid crystal display device 100 is placed is a value equal to or less than values in a range of 1.00 $mW/cm^2$ to 1.8 $mW/cm^2$. Note that the intensity of infrared light here is expressed by an integrated irradiance of light having a wavelength in a range of 800 nm to 1000 nm.

Accordingly, in the liquid crystal display device 100 of the present embodiment, sensors to be used can be switched depending on whether or not an intensity of infrared light of an environment in which the liquid crystal display device 100 is placed is equal to or more than a predetermined value. Here, the predetermined value is preferably a value in a range of 1.00 mW/cm$^2$ to 1.8 mW/cm$^2$.

In a case where the sensors are switched in this way, the sensor control section 70 as shown in Fig. 2 carries out processing as explained below.

First, based on information detected by the infrared light intensity sensor 30c, an infrared light intensity is calculated by the light intensity sensor reading circuit 76 and the light intensity measuring section 77. Concurrently with the calculation, the area sensor reading circuit 73 reads positional information detected by the sensor A and the sensor B. Then, the obtained positional information is sent to the coordinate extracting circuit 74 (sensor switching section).

In the coordinate extracting circuit 74, based on the information on infrared light intensity sent from the light intensity measuring section 77, it is determined whether to use the positional information detected by the sensor A or the positional information detected by the sensor B for detection of a position.

More specifically, in the coordinate extracting circuit 74, based on the information on infrared light intensity (intensity of environmental light) transmitted from the light intensity measuring section 77, as shown in (a) of Fig. 9, an area (T1) obtained in black in a white area is recognized as an input position in a case where the sent infrared light intensity is equal to or more than a predetermined value (e.g. 1.40 mW/cm$^2$). Meanwhile, in a case where an environmental illuminance sent from the light intensity measuring section 77 is less than a predetermined value (e.g. 1.40 mW/cm$^2$), as shown in (b) of Fig. 9, an area (T2) shown in white in a dark area is recognized as an input position.

In this way, in the coordinate extracting circuit 74, a method for detecting an input position is arranged to be different depending on whether or not the environmental infrared light intensity is equal to or more than a threshold. Then, in a case where the environmental infrared light intensity is equal to or more than the threshold, an input position is detected by using, as the positional information, the information obtained by the sensor A. Meanwhile, in a case where the environmental infrared light intensity is less than the threshold, the input position is detected by using, as the positional information, the information obtained by the sensor B.

Note that the predetermined value (threshold) of the above-described infrared light intensity is preferably selected from values, for example, in a range of 1.00 mW/cm$^2$ to 1.8 mW/cm$^2$.

The positional information obtained by the coordinate extracting circuit 74 is outputted to the outside via the interface circuit 75.

As described above, in the liquid crystal display device 100 of the present embodiment, the coordinate extracting circuit 74 can change a way of detecting an input position in accordance with an environmental light intensity. Therefore, it is possible to detect a position through two kinds of sensors by use of one coordinate extracting circuit without providing each of a coordinate extracting circuit for the sensor A and a coordinate extracting circuit for the sensor B. This makes it possible to reduce an amount of information to be processed as well as reducing a circuit scale.

As described above, in the liquid crystal display device 100 of the present embodiment, it is possible to carry out detection of a position by using two kinds of sensors that are the sensor A for detecting visible light and the sensor B for detecting infrared light. This makes it possible to appropriately use the sensors in different conditions, respectively, depending on a range of infrared light intensity in which each sensor is strong in detection. As a result, it is possible to carry out precise detection of a position at an intensity of environmental light in a wider range, as compared to an area sensor that simply employs two kinds of sensors whose light receiving sensitivities are different.

Further, in the liquid crystal display device 100 of the present embodiment, in accordance with an intensity of environmental light, methods for extracting coordinates are switched. Thereby, based on detection information from either sensor, coordinates of a touched position is extracted. Therefore, it is possible to extract coordinates from two kinds of sensors by use of one coordinate extracting circuit.

The above embodiment explains, as an example, a configuration in which the sensors A and the sensors B are alternately disposed in a checkerboard pattern. However, the present invention is not necessarily limited to this configuration. The sensors A and the sensors B may be randomly disposed or a line of sensors A and a line of sensors B may be alternately disposed.

Note that it is preferable that the sensors A and the sensors B are alternately disposed in a checkerboard pattern as in the present embodiment, for an advantage such that such a configuration is capable of minimizing deterioration in resolution caused by including two kinds of optical sensors.

The following explains this point with reference to (a) and (b) of Fig. 11. (a) of Fig. 11 shows an example in which the sensors A and the sensors B are alternately disposed in a checkerboard pattern. (b) of Fig. 11 shows an example in which a line of the sensors A and a line of the sensors B are alternately disposed.

For example, when a resolution of the sensors A is 60 dpi (dot/inch) in a case where only the sensors A is provided in rows and columns in a matrix form, a resolution in a horizontal direction (x direction) and a vertical direction (y direction) is both $(1/\sqrt{2}) \times 60 \approx 42$ dpi in a case where two kinds of sensors (the sensors A and the sensors B) are disposed in a checkerboard pattern as shown in (a) of Fig. 11.

On the other hand, in a case where, as shown in (b) of Fig. 11, respective lines of two kinds of sensors (the sensors A and the sensors B) are alternately disposed, a resolution in the vertical direction (y direction) becomes 1/2 × 60 = 30 dpi while a resolution in the horizontal direction (x direction) stays at 60 dpi. In this case, the total resolution becomes a resolution in the vertical direction which resolution is smaller. Further, a difference occurs between the resolutions in the vertical direction and the horizontal direction.

As described above, the sensors A and the sensors B are provided in a checkerboard pattern. Then, in a case where the total number of optical sensors is identical, it is possible to minimize deterioration in resolution caused by including the two kinds of optical sensors as compared to a resolution of an area sensor made of only one kind of optical sensor.

Further, the above embodiment raises, as an example, a configuration where an optical sensor element is provided in each pixel. However, in the present invention, an optical sensor element is not necessarily provided in each one pixel. Alternatively, the present invention may be configured to include optical sensor elements so that each optical sensor element corresponds to one pixel electrode in each set of R, G, and B pixel electrodes constituting one pixel.

Note that in the temperature compensating sensor 50 provided in the liquid crystal display device 100 of the present embodiment, the lower-layer light blocking film 33 and the upper-layer light blocking film 34 are preferably made of an identical material.

According to the above configuration, the lower-layer light blocking film 33 and the upper-layer light blocking film 34 are made of an identical material. Accordingly, it is possible to block ultraviolet light, visible light and infrared light in light entering from a side opposite to a target surface 100a for detection. This makes it possible to carry out more precise temperature compensation.

Therefore, even if a backlight emitting light having various light wavelengths is used, it is possible to attain a liquid crystal display device 100 including an area sensor capable of carrying out a highly precise temperature compensation.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

Industrial Applicability

The present invention is applicable to an area-sensor-integrated liquid crystal display device including an area sensor (specifically, a touch panel).

Reference Signs List

| | |
|---|---|
| 10 | backlight |
| 20 | liquid crystal panel (area sensor section) |
| 20a | display area (of liquid crystal panel) |
| 21 | active matrix substrate |
| 22 | counter substrate |
| 23 | liquid crystal layer |
| 25 | optical filter |
| 25B | blue color filter |
| 25R | red color filter |
| 25c | aperture section |
| 26 | optical filter structure |
| 27 | black matrix (upper-layer light blocking film of infrared light intensity sensor) |
| 30 | optical sensor element |
| 30A | optical sensor element (optical sensor element for detecting temperature) |
| 30a | optical sensor element (for visible-light sensor) |
| 30b | optical sensor element (for infrared light sensor) |
| 30c | infrared light intensity sensor (light intensity sensor) |
| 31A | visible-light sensor (area sensor section) |
| 31B | infrared light sensor (area sensor section) |
| 33 | lower-layer light blocking film (of temperature compensating sensor) |
| 34 | upper-layer light blocking film (of temperature compensating sensor) |
| 50 | temperature compensating sensor (area sensor section) |
| 100 | touch-panel-integrated liquid crystal display device (liquid crystal display device) |
| 100a | panel surface (target surface for detection) |

**Claims**

1. A liquid crystal display device having an area sensor function for detecting an external input position, the liquid crystal display device comprising:

a liquid crystal panel having a liquid crystal layer provided between an active matrix substrate and a counter substrate, the liquid crystal panel detecting an image on a panel surface and thereby allowing the external input position to be detected,
the liquid crystal panel including an area sensor section including a plurality of optical sensor elements each for detecting an intensity of light received, the area sensor section being for detecting the external input position by causing each of the plurality of optical sensor elements to detect the image on the panel surface,
the area sensor section including the plurality of optical sensor elements each for detecting an intensity of light received, the area sensor section further including:

a temperature compensating sensor for carrying out temperature compensation for each of the plurality of optical sensor elements each for detecting an intensity of light received,

the temperature compensating sensor including:

a lower-layer light blocking film;

an optical sensor element for detecting a temperature of an environment in which the liquid crystal display device is placed, the optical sensor element for detecting a temperature being provided on the lower-layer light blocking film; and

an upper-layer light blocking film for blocking ultraviolet light, visible light, and infrared light, the upper-layer light blocking film being provided so as to cover the optical sensor element for detecting a temperature.

2. The liquid crystal display device as set forth in claim 1, wherein:

the upper-layer light blocking film is a reflective film.

3. The liquid crystal display device as set forth in claim 2, wherein:

the temperature compensating sensor is provided in an outermost fringe section of a display area of the liquid crystal panel.

4. The liquid crystal display device as set forth in any one of claims 1 to 3, wherein:

the area sensor section is provided with light intensity sensors each for detecting an intensity of light in the environment where the liquid crystal display device is placed, each of the light intensity sensors being provided in a position adjacent to a corresponding optical sensor element for detecting an intensity of light received; and

the light intensity sensors each includes an optical sensor element formed on the active matrix substrate in a same process as the plurality of optical sensor elements each for detecting an intensity of light received.

5. The liquid crystal display device as set forth in any one of claims 1 to 3, wherein:

the area sensor section is provided with infrared light intensity sensors each for detecting an intensity of infrared light in the environment where the liquid crystal display device is provided, each of the infrared light intensity sensors being provided in a position adjacent to a corresponding optical sensor element for detecting an intensity of light received; and

the infrared light intensity sensors each includes an optical sensor element for detection of a light intensity and an upper-layer light blocking film for absorbing ultraviolet light and visible light, the upper-layer light blocking film being provided so as to cover the optical sensor element for detection of a light intensity.

6. The liquid crystal display device as set forth in any one of claims 1 to 5, wherein:

in the temperature compensating sensor, the lower-layer light blocking film and the upper-layer light blocking film for blocking ultraviolet light, visible light and infrared light are made of an identical material.

F I G. 1

FIG. 2

31A(30)  31B(30)

100

100a

40a

22
23  20
21

40b

10

BL    WHITE LIGHT + IR

50(30A)
TEMPERATURE
COMPENSATING
SENSOR

30c(30)
INFRARED LIGHT
INTENSITY SENSOR
(LIGHT INTENSITY
SENSOR)

60
LIQUID CRYSTAL
DRIVE CIRCUIT

72
OPTICAL SENSOR
ELEMENT DRIVE
CIRCUIT

73
AREA SENSOR
READING
CIRCUIT

78
TEMPERATURE
COMPENSATING
SENSOR READING
CIRCUIT

76
LIGHT INTENSITY
SENSOR READING
CIRCUIT

71
TIMING
GENERATING
CIRCUIT

74
COORDINATE
EXTRACTING
CIRCUIT

77
LIGHT INTENSITY
MEASURING
SECTION

75
INTERFACE
CIRCUIT

SENSOR CONTROL SECTION

70

EP 2 390 713 A1

17

F I G. 3

SENSOR A

31A

X

30a (30)

X'

25

25c

4

Z

30c (30)

Z'

27

R G B

4

ONE PIXEL

R G B

F I G. 4

SENSOR B

31B

Y

30b (30)

Y'

25

4

Z

30c (30)

Z'

27

R G B

4

ONE PIXEL

R G B

F I G. 5

(a)

(b)

(c)

F I G. 6

SENSOR A

OPTICAL FILTER

F I G. 7

(a)

SENSOR A

(b)

SENSOR B

FIG. 8

(a)

(b)

F I G. 9

(a)

T1

(b)

T2

F I G. 1 0

(a)

ILLUMINANCE(lx)    0         10      100      1000     10000    100000

SENSOR A

(b)

ILLUMINANCE(lx)    0         10      100      1000     10000    100000

SENSOR B
(FLUORESCENT LIGHT)

SENSOR B
(SUNLIGHT)

# F I G. 1 1

(a)

| A | B | A | B |
|---|---|---|---|
| B | A | B | A |
| A | B | A | B |
| B | A | B | A |

$\frac{1}{\sqrt{2}} \times 60dpi$ (vertical, y)

$\frac{1}{\sqrt{2}} \times 60dpi$ (horizontal, x)

(b)

| A | A | A | A |
|---|---|---|---|
| B | B | B | B |
| A | A | A | A |
| B | B | B | B |

30dpi (y)

60dpi (x)

F I G. 1 2

SENSOR A

SENSOR B

ONE PIXEL

R G B

F I G. 1 3

ENVIRONMENTAL TEMPERATURE

F I G. 1 4

WAVELENGTH (nm)

| | INTERNATIONAL SEARCH REPORT | International application No. |
|---|---|---|
| | | PCT/JP2009/065108 |

A.  CLASSIFICATION OF SUBJECT MATTER
*G02F1/1333*(2006.01)i, *G02F1/133*(2006.01)i, *G02F1/1335*(2006.01)i,
*G06F3/041*(2006.01)i, *G09F9/00*(2006.01)i, *G09F9/30*(2006.01)i

According to International Patent Classification (IPC) or to both national classification and IPC

B.  FIELDS SEARCHED

Minimum documentation searched (classification system followed by classification symbols)
G02F1/1333, G02F1/133, G02F1/1335, G06F3/041, G09F9/00, G09F9/30

Documentation searched other than minimum documentation to the extent that such documents are included in the fields searched
Jitsuyo Shinan Koho        1922-1996   Jitsuyo Shinan Toroku Koho    1996-2009
Kokai Jitsuyo Shinan Koho  1971-2009   Toroku Jitsuyo Shinan Koho    1994-2009

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 2005-352490 A  (Samsung Electronics Co., Ltd.),<br>22 December 2005 (22.12.2005),<br>paragraphs [0015], [0059], [0065] to [0069], [0090]; fig. 6, 7 | 1,2<br>3-6 |
| Y | JP 2008-305154 A  (Hitachi Displays, Ltd.),<br>18 December 2008 (18.12.2008),<br>paragraphs [0024], [0027], [0035]; fig. 3 | 1-6 |
| Y | JP 2007-094098 A  (Sanyo Epson Imaging Devices Corp.),<br>12 April 2007 (12.04.2007),<br>paragraphs [0050], [0051], [0095], [0097], [0104]; fig. 13, 14 | 1-6 |

☒  Further documents are listed in the continuation of Box C.        ☒  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 November, 2009 (19.11.09) | 01 December, 2009 (01.12.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2009/065108 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2007-018458 A  (Sony Corp.),<br>25 January 2007 (25.01.2007),<br>paragraphs [0018], [0025], [0033], [0034]; fig.<br>1 to 3 | 3-6 |
| A | JP 2006-018219 A  (Toshiba Mobile Display Co.,<br>Ltd.),<br>19 January 2006 (19.01.2006),<br>paragraphs [0016], [0022]; fig. 1 | 1-6 |
| A | JP 2008-241807 A  (Seiko Epson Corp.),<br>09 October 2008 (09.10.2008),<br>paragraphs [0065], [0067], [0068]; fig. 4 to 8 | 1-6 |
| A | JP 2008-203504 A  (Hitachi Displays, Ltd.),<br>04 September 2008 (04.09.2008),<br>paragraphs [0024], [0025], [0030]; fig. 2, 4 | 1-6 |

Form PCT/ISA/210 (continuation of second sheet) (April 2007)

<table>
<tr><td align="center">INTERNATIONAL SEARCH REPORT<br>Information on patent family members</td><td>International application No.<br>PCT/JP2009/065108</td></tr>
</table>

| | | | |
|---|---|---|---|
| JP 2005-352490 A | 2005.12.22 | US 2005/0275616 A1 | 2005.12.15 |
| | | EP 001605342 A2 | 2005.12.14 |
| | | KR 10-2005-0117464 A | 2005.12.14 |
| | | CN 001722215 A | 2006.1.18 |
| JP 2008-305154 A | 2008.12.18 | US 2009/0002341 A1 | 2009.1.1 |
| JP 2007-094098 A | 2007.4.12 | (Family: none) | |
| JP 2007-018458 A | 2007.1.25 | (Family: none) | |
| JP 2006-018219 A | 2006.1.19 | US 2006/0007224 A1 | 2006.1.12 |
| | | TW 000257077 B | 2006.6.21 |
| | | KR 10-2006-0046264 A | 2006.5.17 |
| | | CN 001707568 A | 2005.12.14 |
| JP 2008-241807 A | 2008.10.9 | (Family: none) | |
| JP 2008-203504 A | 2008.9.4 | US 2008/0198143 A1 | 2008.8.21 |
| | | CN 101251783 A | 2008.8.27 |

Form PCT/ISA/210 (patent family annex) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2005091385 A